## Europäisches Patentamt

## European Patent Office

## Office européen des brevets

(19)

(11) Veröffentlichungsnummer: **0 108 287**
**B1**

(12) # EUROPÄISCHE PATENTSCHRIFT

(45) Veröffentlichungstag der Patentschrift:
**10.12.86**

(51) Int. Cl.⁴: **B 29 B 7/76**

(21) Anmeldenummer: **83110247.0**

(22) Anmeldetag: **14.10.83**

(54) **Hochdruck-Injektions-Mischanlage für reaktionsfähige, flüssige Kunststoffkomponenten.**

(30) Priorität: **30.10.82 DE 3240296**

(43) Veröffentlichungstag der Anmeldung:
**16.05.84 Patentblatt 84/20**

(45) Bekanntmachung des Hinweises auf die Patenterteilung:
**10.12.86 Patentblatt 86/50**

(84) Benannte Vertragsstaaten:
**AT BE CH FR GB IT LI LU NL SE**

(56) Entgegenhaltungen:
**DD - A - 126 248**
**DE - A - 2 030 516**
**DE - A - 2 613 771**
**FR - A - 2 173 304**
**GB - A - 1 195 436**
**US - A - 4 099 652**

**MODERN PLASTICS INTERNATIONAL, Band 11, Nr. 9, September 1981, Lausanne, "Nylon RIM machine aimed at matching (or beating) urethane cycles", Seiten 16,21**

(73) Patentinhaber: **Krauss-Maffei Aktiengesellschaft, Krauss-Maffei-Strasse 2, D-8000 München 50 (DE)**

(72) Erfinder: **Wagner, Peter, Dipl.-Ing., Josef-Lerchenbauer-Strasse 9, D-8061 Weichs (DE)**

(74) Vertreter: **Konle, Tilmar, Dipl.-Ing., Benderstrasse 23a, D-8000 München 60 (DE)**

## Beschreibung

Die Erfindung bezieht sich auf eine Hochdruck-Injektions-Mischanlage gemäss dem Oberbegriff des Patentanspruchs 1. Eine derartige Anlage ist aus der DE-A 2 613 771 bekannt.

Die bekannte Anlage nach der DE-A 2 613 771 arbeitet in der Weise, dass das Dosierkolbenaggregat mit einem Saughub die betreffende Komponente über eine Leitung aus dem Vorratsbehälter ansaugt. In dieser Leitung befindet sich ein Rückschlagventil in solcher Anordnung, dass der Saugvorgang möglich ist. Beim Druckhub des Dosierkolbenaggregats wird die Komponente auf Grund der Sperrwirkung des Rückschlagventils über die zum Mischkopf führende Leitung aus dem Dosierkolbenraum zum Mischkopf gedrückt und dort je nach dessen Steuerstellung entweder in die Mischkammer oder über die Rücklaufleitung zum Vorratsbehälter zurückgefördert, wobei diese in den Vorratsbehälter führt. Üblicherweise befindet sich das Dosierkolbenaggregat in dauerndem Betrieb, so dass stets nur ein Teil der Komponentenmenge eines Hubes des Dosierkolbens in die Mischkammer geleitet wird. Dort wird die Komponente mit der zweiten Komponente gemischt und das Gemisch dem Formhohlraum zugeführt, wo es zu einem Kunststoff ausreagiert.

Mit dem Druck des Druckhubes wird der üblicherweise erhebliche Injektionsdruck vor der Mischkammer aufgebaut. Dieser Druck beträgt bei Caprolactam um 20 bar, bei Polyurethan um 200 bar.

Insbesondere dann, wenn zumindest eine der Komponenten füllstoffbeladen ist, z.B. mit Glasfasern vermischt ist, tritt der Nachteil auf, dass sich die Leitung zwischen dem Vorratsbehälter und dem Dosierkolbenaggregat zusetzt. Diese Leitung wird nur mit einem vergleichsweise niedrigen Saugdruck beaufschlagt. Der Nachteil tritt dann besonders stark in Erscheinung, wenn der sonst etwa 20 bar betragende Vordruck im Vorratsbehälter aus bestimmten Gründen nur niedrig sein darf, z.B. im Falle der Verarbeitung von Caprolactam maximal 0,4 bar.

Derselbe Nachteil, jedoch in gesteigertem Masse, tritt bei einer weiteren bekannten Mischanlage nach der DE-A 2 030 516 auf, bei welcher die Rücklaufleitungen nicht in die Vorratsbehälter, sondern in die jeweiligen Saugleitungsab-schnitte zwischen Vorratsbehälter und Förder-pumpe münden. In der Rezirkulationsstellung des Mischkopfes befinden sich in den Leitungsabschnitten zwischen den Vorratsbehältern und den Einmündungsstellen der Rücklaufleitungen praktisch stehende Flüssigkeitssäulen, welche nach kurzer Zeit zum Verstopfen besagter Leitungsabschnitte führen.

Der Erfindung liegt die Aufgabe zugrunde, ein Zusetzen oder Verstopfen der Saugleitung zwischen Vorratsbehälter und Dosierkolbenaggregat zu vermeiden.

Diese Aufgabe wird durch die im Kennzeichen des Patentanspruchs 1 genannten Merkmale gelöst.

Die Massnahme, zumindest einen Teil der Saugleitung ausserhalb der Mischphase als Rückleitung, d.h., als Druckleitung zu benutzen, bewirkt dadurch, dass je nach Ausmass der Verstopfung sich ein erhöhter Druck einstellt, eine Reinigung dieses Leitungsteils. Neben diesem verfahrenstechnischen Vorteil ergibt sich durch Einsparung von Rohrleitungsteilen eine Vereinfachung der Anlage.

Die Massnahme nach dem Patentanspruch 2 bewirkt, dass praktisch die gesamte Saugleitung zeitweise als Druckleitung dient und dadurch frei von Verstopfung bleibt.

Die Erfindung wird im folgenden anhand zweier in der Zeichnung schematisch dargestellter Ausführungsbeispiele erläutert. Dabei zeigt

Fig. 1 das Schema einer Vorrichtung zum Dosieren, Mischen und Rezirkulieren zweier Komponenten und

Fig. 2 die Teilansicht einer Anlage mit veränderter Leitungsführung.

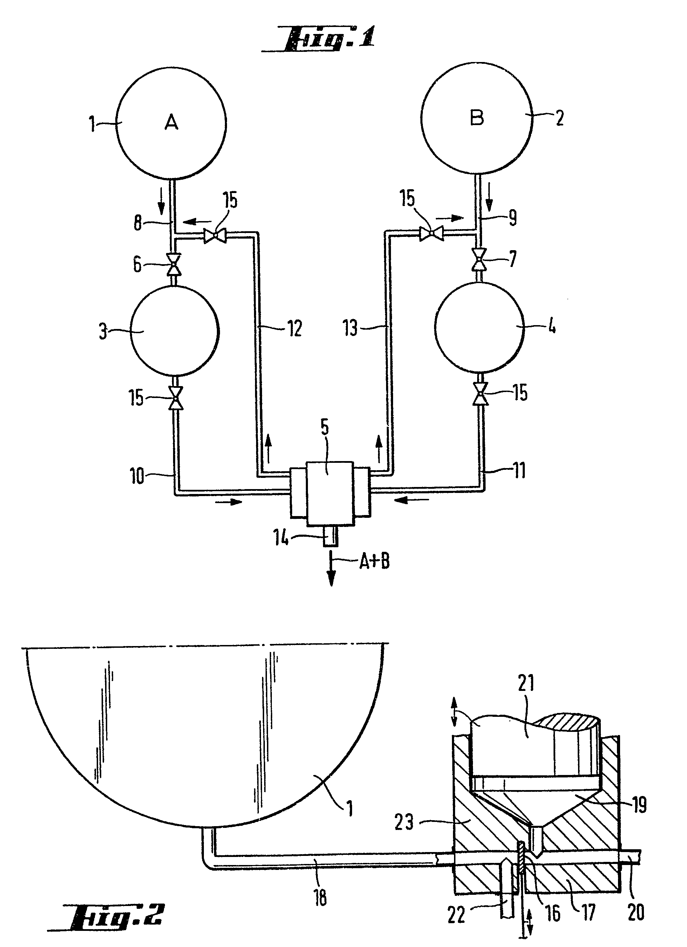

In Fig. 1 sind zwei Vorratsbehälter für unterschiedliche Kunststoffkomponenten A und B mit 1 und 2, zwei Dosierkolbenaggregate mit 3 und 4 und ein Mischkopf mit 5 bezeichnet. Die Verbindung zwischen den Vorratsbehältern 1, 2 und den Dosierkolbenaggregaten 3, 4 ist durch je ein steuerbares Absperrorgan 6, 7 aufweisende Leitungen 8, 9 und die Verbindung zwischen den Dosierkolbenaggregaten 3, 4 und dem Mischkopf 5 durch Leitungen 10, 11 hergestellt. Von diesem gehen zwei Leitungen 12 und 13 als Rücklaufleitungen aus und münden in die Leitung 8 bzw. 9 unmittelbar oberhalb des Absperrorgans 6 bzw. 7.

Das Dosierkolbenaggregat 3 bzw. 4 weist – wie anhand eines hinsichtlich der Leitungsführung leicht veränderten Ausführungsbeispiels in Fig. 2 sichtbar – einen Dosierkolben 21 auf, bei dessen Saughub (Hub nach oben) die Kunststoffkomponente A bzw. B über die Leitung 8 bzw. 9 aus dem Vorratsbehälter 1 bzw. 2 angesaugt wird, während beim Druckhub die in den Dosierkolbenraum angesaugte Komponente A bzw. B unter Druck über die Leitung 10 bzw. 11 zum Mischkopf 5 geleitet wird. Je nach dessen Steuerstellung tritt die Mischung beider Komponenten A, B aus der Austrittsöffnung 14 der Mischkammer zur Weiterleitung in den Formhohlraum aus (Mischphase) oder aber werden beide Komponenten vor der Mischkammer über die Leitungen 12, 13 ungemischt in die Vorratsbehälter 1, 2 zurückgeleitet, und zwar das letzte Stück über den Teil der Leitungen 8, 9, der sich oberhalb der Absperrorgane 6, 7 befindet (Nichtmischphase). Dieser Leitungsteil dient während des Saughubs des Dosierkolbens als Saugleitung. Da diese Rezirkulation der Komponenten stets während des Druckhubs erfolgt, erfolgt hierbei stets eine Reinigung des erwähnten Teils der Leitungen 8, 9.

Fig. 1 zeigt weitere steuerbare Absperrorgane 15 in den Leitungen 8 bis 11, und zwar in der Nähe der Dosierkolbenaggregate 3 und 4. Sie haben die Aufgabe, die einzelnen Strömungsflüsse bei Saug- und Druckhub auf alle Fälle sicherzustellen, indem nämlich die Absperrorgane 15 beim Saughub geschlossen und beim Druckhub geöffnet sind. Die Absperrorgane 15 sind je nach Aufbau des Mischkopfes 5 nicht erforderlich, z.B. dann nicht, wenn die Komponente über eine enge Düse in die Mischkammer eintritt, da über diese Düse beim Saughub nicht angesaugt werden könnte. Es ist ferner möglich, die Absperrorgane 6 und 7 und 15, soweit sie in den Leitungen 10 und 11 liegen, als Rückschlagventile auszubilden, sofern das Ausmass der Füllstoffbeladung dies noch zulässt (Gefahr des Zusetzens). Im übrigen liegt die Ausbildung der Absperrorgane 6, 7 und 15 im Belieben des Fachmannes.

Nach Fig. 2 ist die Lage des Absperrorgans 16 gegenüber der Lage des Absperrorgans 6 bzw. 7 nach Fig. 1 verändert worden. Es ist nunmehr im Boden 17 des Dosierkolbenaggregats 23 untergebracht, und zwar kurz vor der Einmündung der vom Vorratsbehälter 1 kommenden Leitung 18 in den Dosierkolbenraum 19 des Dosierkolbenaggregats 23 und dem Dosierkolben 21. Vom Dosierkolbenraum 19 geht ferner die zum Mischkopf führende Leitung 20 ab. Die Leitung vom Mischkopf ist mit 22 bezeichnet; sie mündet unmittelbar neben dem Absperrorgan 16 in die Leitung 18, so dass bei dieser Anordnung die gesamte Saugleitung unter den Druck der Komponente während deren Rückführung gesetzt werden kann.

**Patentansprüche**

1. Hochdruck-Injektions-Mischanlage für reaktionsfähige, flüssige Kunststoffkomponenten, von denen wenigstens eine Kunststoffkomponente mit einem Füllstoff beladen ist, mit einem Mischkopf (15), welcher

(a) in seiner Mischstellung für jede Kunststoffkomponente über ein Dosierkolbenaggregat (3 bzw. 4 mit einem Vorratsbehälter (1 bzw. 2) verbunden ist, und

(b) in seiner Nichtmischstellung über eine Rücklaufleitung (12 bzw. 13, 22) für jede Kunststoffkomponente mit dem jeweiligen Vorratsbehälter (1 bzw. 2) verbunden ist, dadurch gekennzeichnet, dass die Rücklaufleitung (12 bzw. 13, 22) für zumindest die füllstoffbeladene Kunststoffkomponente (A bzw. B) in die Zulaufleitung (8 bzw. 9) zwischen dem jeweiligen Vorratsbehälter (1 bzw. 2) und dem jeweiligen Dosierkolbenaggregat (3 bzw. 4; 23) einmündet, und dass zwischen der Einmündungsstelle und dem jeweiligen Dosierkolbenaggregat (3 bzw. 4; 23) ein Absperrorgan (6 bzw. 7; 16) angeordnet ist, welches in der Nichtmischstellung des Mischkopfes (5) beim Saughub des Dosierkolbens (21) geöffnet und beim Druckhub geschlossen ist.

2. Hochdruck-Injektions-Mischanlage nach Anspruch 1, dadurch gekennzeichnet, dass das Absperrorgan (16) im Boden (17) des Dosierkolbenaggregates (23) angeordnet ist.

**Revendications**

1. Dispositif pour mélanger, par injection à haute pression, des composants réactifs fluides générateurs d'une matière plastique, l'un au moins de ces composants comportant une charge, ce dispositif présentant une tête mélangeuse (5) qui:

(a) dans sa position de mélange est reliée, pour chaque composant générateur de la matière plastique, par l'intermédiaire d'une pompe doseuse (3 ou 4) avec un récipient (1 ou 2), et

(b) dans sa position de non-mélange, est reliée par un conduit (12, 13; 22) de recyclage de chaque composant générateur de la matière plastique avec le récipient (1 ou 2) correspondant, dispositif caractérisé en ce que le conduit de recyclage (12 ou 13, 22) d'au moins le composant (A ou B), comportant une charge, et générateur de matière plastique, débouche dans le conduit (8 ou 9) d'admission situé entre le récipient (1 ou 2) correspondant et la pompe doseuse (3 ou 4, 23) correspondante, et en ce que, entre l'endroit de ce débouché et la pompe doseuse (3 ou 4; 23) correspondante, est placé un organe (6 ou 7; 16) d'obturation qui est ouvert dans la position de non-mélange de la tête mélangeuse (5) pendant la course d'aspiration du piston doseur (21) et qui est fermé pendant la course de compression.

2. Dispositif pour mélanger par injection à haute pression selon la revendication 1, caractérisé en ce que l'organe(16) d'obturation est placé au fond (17) de la pompe doseuse (23).

**Claims**

1. An apparatus for mixing by injection under high pressure of liquid reactive plastics components, at least one of which being loaded with a filler, having a mixer head (5) which,

(a) in its mixing position, for each of the plastics components is connected via a dosing piston unit (3 and 4, resp.) to a storage recipient (1 and 2, resp.) and,

(b) in its non-mixing position, for each of the plastics components is connected via a return line (12 and 13, resp. 22) to the respective storage recipient (1 and 2, resp.), characterized in that the return line (12 and 13, resp.; 22) ends in the inlet line (8 and 9, resp.) between the respective storage recipient (1 and 2, resp.) and the respective dosing piston unit (3 and 4, resp.; 23) for at least the filler-loaded plastics component (A, B resp.) and that between the inlet site and the respective dosing piston unit (3 and 4, resp.; 23) there is a shut-off device (6 and 7, resp.; 16) which is open in the non-mixing position of the mixer head (6) at the suction stroke of the dosing piston (21) and is shut at pressure stroke.

2. An apparatus for mixing by injection under high pressure in accordance with claim 1, characterized in that the shut-off device (16) is displayed at the bottom (17) of the dosing piston unit (23).

**Fig.1**

**Fig.2**